# EUROPEAN PATENT SPECIFICATION

(11) **EP 2 071 709 B1**
(45) Date of publication and mention of the grant of the patent: **01.09.2010**
(21) Application number: 07024067.6
(22) Date of filing: 12.12.2007
(51) Int. Cl.: H02K 7/18, F03B 13/26

(54) **A hydroelectric turbine generator component**
Generatorkomponente für eine hydroelektrische Turbine
Composant de générateur de turbine hydroélectrique

(43) Date of publication of application: 17.06.2009
(73) Proprietor: OpenHydro Group Limited, Dublin 2 (IE)
(72) Inventor: Ives, James, Dublin 2 (IE); Dunne, Paul, Drumcondra Dublin 9 (DE)
(74) Representative: O'Neill, Brian

(56) References cited:
- US-A- 2 782 321
- US-A- 3 422 275
- US-A- 3 708 251
- US-A- 4 720 640
- US-A1- 2003 137 149
- US-A1- 2004 021 437
- US-A1- 2004 201 299

## Description

### Field of the invention

This invention relates generally to the field of hydroelectric turbines, and more particularly relates to such turbines wherein the fluid flow causes rotation of a large propeller-type rotor having an annular outer rim disposed within a large annular housing. Even more particularly, the invention relates to a generator component of the hydroelectric turbine, and in particular the coils and magnets forming the main components of the generator.

### Background of the invention

Power take off from a hydroelectric turbine, and in particular an open-centre turbine, is most conveniently arranged by means of an electrical generator of rim construction located at the outer edge of the rotor and inner edge of the stator. The field system may use electrical coils supplied with current or a set of permanent magnets to provide the magneto motive force required to drive magnetic flux through the magnetic circuit. This arrangement gives a large diameter open space in the centre of the stator that accommodates the rotor.

Examples of open center, rim-mounted turbines can be seen in U.S. Patent No. 5,592,816 issued Jan. 14, 1997, and reissued as RE38,336 on Dec. 2, 2003, U.S. Patent No. 6,648,589 issued Nov. 18, 2003, U.S. Patent No. 6,729,840 issued May 4, 2004, and U.S. Patent Appl. Publication US2005/0031442 published Feb. 10, 2005 (Ser. No. 10/633,865). Examples of hydroelectric turbines used in low head (tidal flow) conditions can be seen in U.S. Patent No. 4,421,990 to Heuss et al., U.S. Patent Nos. 6,168,373 and 6,406,251 to Vauthier, UK Patent Appl. No. GB 2,408,294 to Susman et al., and WIPO International Publication WO 03/025385 to Davis et al.

US3422275 discloses a water turbine, pump or reversible pump/turbine comprising two coaxial tubes having facing end flanges whose outer edges are sealed to the inner peripheral surface of the stator of a dynamo-electric machine so as to form a circumferential channel surrounding and in communication with the water tube in which channel the rotor of the dynamo-electric machine rotates.

US2004/201299 discloses a flywheel magneto generator which comprises a rotor having a magnet attached to an outer circumferential side of a flywheel and a stator constructed by winding a generating coil around a core having a magnetic pole portion opposed to a magnetic pole of the rotor, wherein a through hole is formed in a peripheral wall portion of the flywheel, a yoke plate is provided so as to block one end of the through hole which is opened on an inner circumferential side of a peripheral wall portion of the flywheel, the magnet to which a magnet cover is attached is supported on the yoke plate, and one magnetic pole face of the magnet is opposed to the yoke plate.

Because the annular outer rim of the rotor is received within a channel in the stator housing, liquid-borne debris may be captured within the channel. Any significant accumulation of debris will interfere with rotation of the rotor and may cause damage.

### Summary of the invention

The present invention therefore provides a hydroelectric turbine generator component according to claim 1.

Preferably, the casing is substantially tubular in cross section.

Preferably, the casing is substantially box shaped in cross section.

Preferably, the generator component comprises a plurality of tabs extending away from a rear face of the generator component.

Preferably, the generator element comprises a plurality of wire wound coils overlapping one another.

Preferably, the at least one wire wound coil is electrically insulated from the casing.

Preferably, the generator component comprises a layer of electrically insulating material disposed between the at least one wire wound coil and the casing.

Preferably, the casing defines a pair of end walls.

Preferably, the casing is folded from a sheet of material.

Preferably, a bonding agent is provided between the casing and the filler material.

Preferably, the casing provides thermal insulation to the generator element from, in use, adjacent generator elements.

### Brief description of the drawings

Figure 1 illustrates a perspective view of a hydroelectric turbine generator component comprising a wire wound coil; and
Figure 2 illustrates a perspective view of a hydroelectric turbine generator component comprising a magnet.

### Detailed description of the drawings

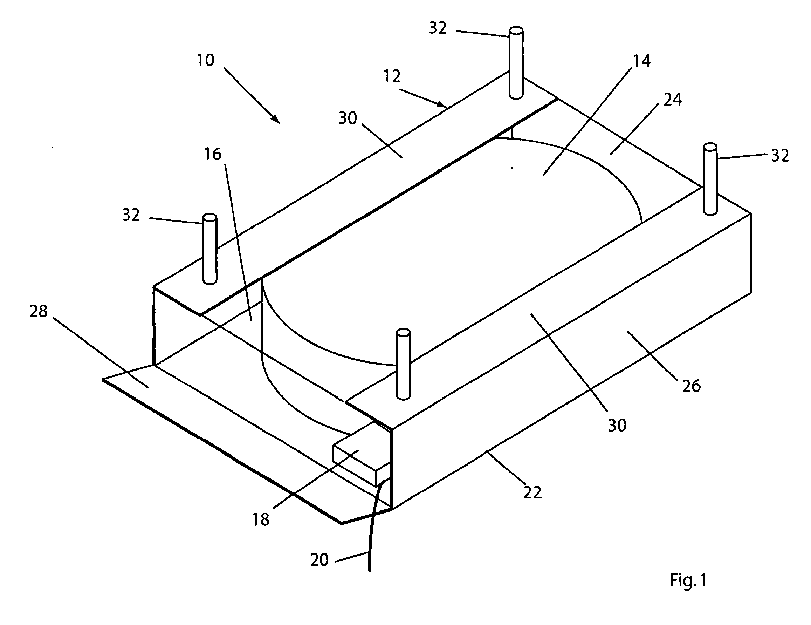

Referring now to Figure 1 of the accompanying drawings, there is illustrated a first embodiment of a hydroelectric turbine generator component, generally indicated as 10. The generator component 10 comprises a casing 12 which houses a generator element which, in the embodiment illustrated, is in the form of a wire wound coil 14. In use, a plurality of the components 10 are provided in an annular array to define part of an electromagnetic circuit of a hydroelectric turbine generator (not shown). The array of generator components 10 are preferably placed on the stator and face, across a small water gap, a corresponding array of magnets (not shown) positioned on an outer rim of a rotor (not shown) of the turbine. In this way, as the rotor rotates in response to tidal flow through the turbine, the array of magnets move past the stationary array of generator components 10, thereby generating a current in each coil 14 in known manner.

The casing 12 is preferably tubular in form, and more preferably substantially box shaped in cross section, in order to partially surround and enclose the coil 14. The component 10 further comprises filler material 16 which fills the interior space defined by the casing 12 and encapsulates the windings of the coil 14, in order to fix the coil 14 within the casing 12. In the preferred embodiment illustrated the filling material is a potting resin, although any other suitable material may be employed. The potting process is preferably undertaken using vacuum pressure impregnation, although any other suitable method may be employed in order to apply and cure the filler material 16.

The generator component 10, when comprising the wire wound coil 14, is also preferably provided with an electronic component in the form of a suitable rectifier 18 which is also encapsulated within the filler material 16, adjacent to the coil 14. The rectifier 18 is electrically connected to the coil 14 and is provided with electrical outputs 20, which exit the filler material 16 to be suitably connected to the electrical circuit (not shown) of the hydroelectric turbine (not shown). Although only a single coil 14 is shown in Figure 1, it is envisaged that two or more overlapping coils may be provided within the casing 12, in order to improve the electrical performance of the generator component 10. In that situation individual rectifiers would be provided for each coil, and again to be encapsulated within the filler material 16. It will also be appreciated that the rectifier 18 could be replaced or accompanied by any other electronic component.

The generator component 10 includes a front face 22 which, in use, faces towards the annular array of magnets (not shown), and a rear face 24 which must be suitably secured to the stator body (not shown) of the turbine. A pair of side walls 26 extend between the front face 22 and the rear face 24, as do a pair of end walls 28 which are shown folded down in Figure 1, but which in use are folded up against the resin 16 to close each end of the casing 12. Extending partially across the rear face 24, from each side wall 26, is a respective lip 30 which forms part of the casing 12. In this way, the casing 12 substantially surrounds the coil 14, and fully covers the coil 14 on the front face 22, while leaving an opening in the casing 12 between the opposing lips 30. This opening allows the coil 14 to be introduced into the casing 12, in addition to allowing the rectifier 18 to be suitably positioned, prior to the introduction of the filler material 16. The opening in the casing 12 also allows the easy injection of the filler material 16 evenly across the entire space defined by the casing 12. The casing 12 therefore acts as shuttering surrounding the coil 14 to retain the filler material 16 while it cures. Once cured the filler material 16 and casing 12 provide robust encapsulation of the coil 14 in order to protect same during operation in the harsh working conditions experienced by hydroelectric turbine.

The casing 12, and in particular the front face 22 thereof, protects the coil 14 from debris impact and general wear and tear, as the front face 22 is directly exposed to the water and any debris entrained therein, as a result of facing into the water gap between the stator and rotor of the turbine. The rear face 24 of the component 10 is seated against the body of the stator, and thus does not require the casing 12 to extend thereacross. However, by providing the side walls 26 of the casing 12, in addition to the pair of lips 30, a pair of edges or folds are provided along either side of the casing 12. This folding of the casing 12, to provide the box like cross section, significantly increases the stiffness of the casing 12, and therefore improves the structural integrity of the finished component 10. For ease of manufacture, the casing 12 is preferably formed from sheet material, most preferably stainless steel or the like, and folded into the desired shape. Each of the end walls 28 are folded up into position prior to the introduction of the potting 16.

While the rear face 24 may be bonded or otherwise adhered to the stator body of the turbine, in the preferred embodiment illustrated a number of tabs 32 project rearwardly from the rear face 24. The tabs 32 are preferably provided at each corner of the component 10, and pass through the respective lip 30 to extend into the internal space defined by the casing 12. In this way the lower end of each of the tabs 32 will also be encapsulated within the filler material 16 in order to resist separation of the tabs 32 from the casing 12 during use. In use, these tabs 32 are captured within the wire windings (not shown) which form the stator core, which provides the magnetic flux return path, thus providing a more robust connection between the generator component 10 and the stator, although the tabs 32 may be otherwise secured to the stator.

As mentioned above, the casing 12 is preferably formed from stainless steel or the like, and thus in the preferred embodiment illustrated is electrically conducting. The coil 14 is therefore electrically insulated from the casing 12, preferably by providing a sheet of electrical insulation (not shown) between the coil 14 and the casing 12. During manufacture this sheet of insulation is laid on the inside of the casing 12, following which the coil 14 is located thereon. The filler material 16 is then introduced into the casing 12 in order to encapsulate the coil 14. In a particularly preferred embodiment a bonding agent may be provided on the inner surface of the casing 12 prior to introducing the filler material 16 in order to improve the adhesion between the filler material 16 and the casing 12. This will further prevent the ingress of water between the cured filler material 16 and the casing 12, during the prolonged submergence, during use, of the generator component 10.

During use, the filler material 16, in addition to the casing 12, acts as a heat sink for the coil 14, thereby improving the electrical performance of the coil 14, during generation of electricity by the hydroelectric turbine. The casing 12 and filler material 16 also provide a robust and rigid support or housing for the coil 14, while the casing 12, and in particular the portion thereof defining the front face 22, provides protection from debris impact on the coil.

In use a circular array of the generator components 10 are arranged on the stator of a hydroelectric turbine (not shown), and generally in edge to edge contact with each adjacent component 10. Thus the sidewall 26 of one component 10 will be in abutting engagement with the sidewall 26 of an adjacent component 10. In this way each coil 14 is separated from an adjacent coil by two sidewalls, which provides significant thermal insulation between coils 14. In the event of malfunction in a coil 14 leading to excessive heating and possible melting of the coil 14, the two sidewalls 26 will provide thermal insulation and protection to the adjacent coils 14 in order to prevent damage thereto.

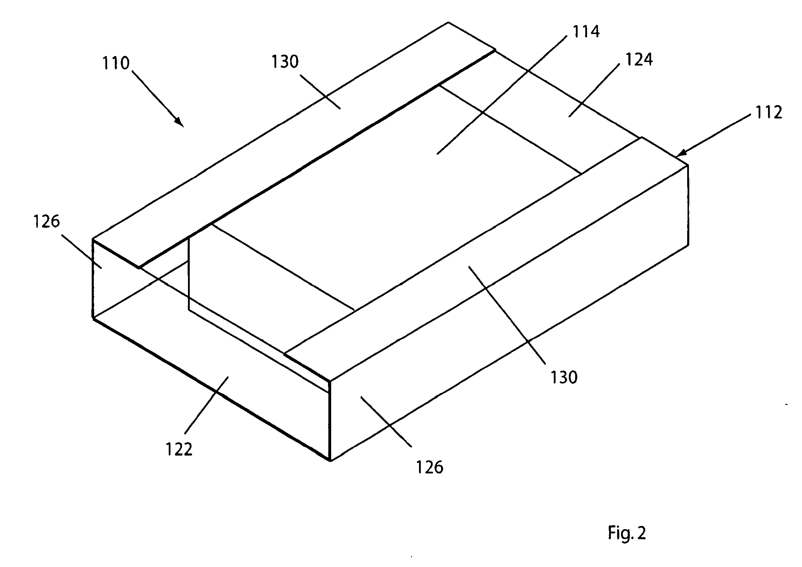

Referring now to Figure 2 there is illustrated an alternative embodiment of a generator component according to the present invention, generally indicated as 110. In this alternative embodiment like components have been according like reference numerals, and unless otherwise stated perform a like function. The generator component 110 comprises a casing 112 which houses a generator element which, in this second embodiment, is in the form of a magnet 114. As described above, a hydroelectric turbine (not shown) includes an annular array of magnets on the outer rim of the rotor (not shown) which interact with coils on the stator to generate electricity. The magnets and coils face each other across a water gap and are therefore both exposed, during use, to the sea water and any debris entrained therein. Thus the casing 112 is provided around the magnet 114 to provide protection thereto, and the magnet 114 is then encapsulated in resin (not shown) as hereinbefore described. The casing 112 and encapsulating resin thus provide both impact/wear protection as well as structural rigidity to the magnet 114.

The casing 112 is again preferably folded from a flat sheet of material into a tubular shape defining a front face 122, a rear face 124, side walls 126 and a pair of lips 130. It will however be appreciated that the exact shape of the casing 112 may vary significantly while still providing the above described functionality.

## Claims

1. A hydroelectric turbine generator component (10; 110) comprising a generator element (14; 114) comprising at least one wire wound coil (14); a casing (12; 112) at least partially surrounding the generator element (14; 114); and filler material (16) encapsulating the generator element and securing the generator element (14; 114) within the casing (12; 112); **characterized by** the fact it further comprises an electronic component (18) encapsulated within the filler material (16) adjacent and electrically connected to the at least one wire wound coil (14), wherein the electronic component (18) comprises a rectifier (18).

2. A hydroelectric turbine generator component according to claim 1 in which the casing (12; 112) is substantially tubular in cross section.

3. A hydroelectric turbine generator component according to claim 1 or 2 in which the casing (12; 112) is substantially box shaped in cross section.

4. A hydroelectric turbine generator component according to any preceding claim comprising a plurality of tabs (32) extending away from a rear face (24) of the generator component.

5. A hydroelectric turbine generator component according to any preceding claim in which the generator element (14) comprises a plurality of wire wound coils overlapping one another.

6. A hydroelectric turbine generator component according to any preceding claim in which the at least one wire wound coil (14) is electrically insulated from the casing (12).

7. A hydroelectric turbine generator component according to any preceding claim comprising a layer of electrically insulating material disposed between the at least one wire wound coil (14) and the casing (12).

8. A hydroelectric turbine generator component according to any preceding claim in which the casing (12; 112) defines a pair of end walls (28).

9. A hydroelectric turbine generator component according to any preceding claim in which the casing (12; 112) is folded from a sheet of material.

10. A hydroelectric turbine generator component according to any preceding claim in which a bonding agent is provided between the casing (12; 112) and the filler material (16).

11. A hydroelectric turbine generator component according to any preceding claim in which the casing provides thermal insulation to the generator element from, in use, adjacent generator elements.

## Patentansprüche

1. Komponente (10; 110) eines hydroelektrischen Turbinengenerators, umfassend ein Generatorelement (14; 114), umfassend mindestens eine drahtgewickelte Spule (14); ein Gehäuse (12; 112), das das Generatorelement (14; 114) mindestens teilweise umgibt; und Füllmaterial (16), das das Generatorelement einschließt und das Generatorelement (14; 114) im Gehäuse (12; 112) sichert; **dadurch gekennzeichnet, dass** sie weiter ein an die mindestens eine drahtgewickelte Spule (14) angrenzendes und elektrisch mit ihr verbundenes, im Füllmaterial (16) eingeschlossenes Elektronikbauteil (18) umfasst, wobei das Elektronikbauteil (18) einen Gleichrichter (18) umfasst.

2. Komponente eines hydroelektrischen Turbinengenerators nach Anspruch 1, wobei das Gehäuse (12; 112) einen im Wesentlichen röhrenförmigen Querschnitt hat.

3. Komponente eines hydroelektrischen Turbinengenerators nach Anspruch 1 oder 2, wobei das Gehäuse (12; 112) einen im Wesentlichen kastenförmigen Querschnitt hat.

4. Komponente eines hydroelektrischen Turbinengenerators nach einem der vorangehenden Ansprüche, umfassend eine Vielzahl von Zapfen (32), die sich von einer Rückseite (24) der Generatorkomponente weg erstrecken.

5. Komponente eines hydroelektrischen Turbinengenerators nach einem der vorangehenden Ansprüche, wobei das Generatorelement (14) eine Vielzahl einander überlappender drahtgewickelter Spulen umfasst.

6. Komponente eines hydroelektrischen Turbinengenerators nach einem der vorangehenden Ansprüche, wobei die mindestens eine drahtgewickelte Spule (14) elektrisch vom Gehäuse (12) isoliert ist.

7. Komponente eines hydroelektrischen Turbinengenerators nach einem der vorangehenden Ansprüche, umfassend eine Schicht elektrisch isolierenden Materials, die zwischen der mindestens einen drahtgewickelten Spule (14) und dem Gehäuse (12) angeordnet ist.

8. Komponente eines hydroelektrischen Turbinengenerators nach einem der vorangehenden Ansprüche, wobei das Gehäuse (12; 112) ein Paar Stirnwände (28) definiert.

9. Komponente eines hydroelektrischen Turbinengenerators nach einem der vorangehenden Ansprüche, wobei das Gehäuse (12; 112) aus einer dünnen Platte von Material gefaltet ist.

10. Komponente eines hydroelektrischen Turbinengenerators nach einem der vorangehenden Ansprüche, wobei ein Haftvermittler zwischen dem Gehäuse (12; 112) und dem Füllmaterial (16) vorgesehen ist.

11. Komponente eines hydroelektrischen Turbinengenerators nach einem der vorangehenden Ansprüche, wobei das Gehäuse Wärmeisolierung vor, in Gebrauch, benachbarten Generatorelementen fiir das Generatorelement vorsieht.

## Revendications

1. Composant de turbogénérateur hydroélectrique (10 ; 110) comportant un élément générateur (14 ; 114) comportant au moins une bobine de fil métallique enroulée (14) ; un boîtier (12 ; 112) entourant au moins partiellement l'élément générateur (14 ; 114) ; et un matériau de charge (16) encapsulant l'élément générateur et assujettissant l'élément générateur (14 ; 114) à l'intérieur du boîtier (12 ; 112) ; **caractérisé par le fait qu'**il comporte par ailleurs un composant électronique (18) encapsulé à l'intérieur du matériau de charge (16) adjacent et connecté électriquement à ladite au moins une bobine de fil métallique enroulée (14), dans lequel le composant électronique (18) comporte un redresseur (18).

2. Composant de turbogénérateur hydroélectrique selon la revendication 1, dans lequel le boîtier (12 ; 112) a une coupe transversale sensiblement tubulaire.

3. Composant de turbogénérateur hydroélectrique selon la revendication 1 ou la revendication 2, dans lequel le boîtier (12 ; 112) a une coupe transversale sensiblement en forme de caisson.

4. Composant de turbogénérateur hydroélectrique selon l'une quelconque des revendications précédentes, comportant une pluralité d'ergots (32) s'étendant depuis une face arrière (24) du composant de générateur.

5. Composant de turbogénérateur hydroélectrique selon l'une quelconque des revendications précédentes, dans lequel l'élément générateur (14) comporte une pluralité de bobines de fil métallique enroulées se chevauchant les unes par rapport aux autres.

6. Composant de turbogénérateur hydroélectrique selon l'une quelconque des revendications précédentes, dans lequel ladite au moins une bobine de fil métallique enroulée (14) est électriquement isolée du boîtier (12).

7. Composant de turbogénérateur hydroélectrique selon l'une quelconque des revendications précédentes, comportant une couche de matériau électriquement isolant disposée entre ladite au moins une bobine de fil métallique enroulée (14) et le boîtier (12).

8. Composant de turbogénérateur hydroélectrique selon l'une quelconque des revendications précédentes, dans lequel le boîtier (12 ; 112) définit une paire de parois d'extrémité (28).

9. Composant de turbogénérateur hydroélectrique selon l'une quelconque des revendications précédentes, dans lequel le boîtier (12 ; 112) est plié à partir d'une feuille de matériau.

10. Composant de turbogénérateur hydroélectrique selon l'une quelconque des revendications précédentes, dans lequel un agent de liaison est mis en oeuvre entre le boîtier (12 ; 112) et le matériau de charge (16).

11. Composant de turbogénérateur hydroélectrique selon l'une quelconque des revendications précédentes, dans lequel le boîtier procure une isolation thermique à l'élément générateur par rapport, lors de l'utilisation, à des éléments générateurs adjacents.
